Europäisches Patentamt

European Patent Office

Office européen des brevets

(11) Publication number: **0 259 009**
**A2**

(12) **EUROPEAN PATENT APPLICATION**

(21) Application number: 87306831.6

(22) Date of filing: 31.07.87

(51) Int. Cl.4: **B01J 3/03** ,
//A61L2/26,A61L11/00

(30) Priority: 02.08.86 GB 8618944

(43) Date of publication of application:
**09.03.88 Bulletin 88/10**

(84) Designated Contracting States:
**BE FR NL**

(71) Applicant: WINSFORD TECHNOLOGY LIMITED
Valley Road
Bradford West Yorkshire BD1 4RJ(GB)

(72) Inventor: Parker, Norman
23 Town Street
Gildersome Morley LS27 7AB(GB)

(74) Representative: Taylor, Derek George et al
Mathisen, Macara & Co. The Coach House
6-8 Swakeleys Road
Ickenham Uxbridge UB10 8BZ(GB)

(54) **Autoclave sealing.**

(57) An autoclave has a sliding door 11 which is movable by a pneumatically driven support frame 15 linearly between an open position and a closed but unsealed position. The support frame 15 is connected to the door 11 by spring mountings 17,18 so that, when the door reaches the closed position defined by stops 29, the support frame 15 is able to continue to move in the sliding direction of the door so as to drive a series of rollers 21 along ramps 22 mounted on the door in order to cam the door transversely with respect to the sliding direction into a closed and sealed position in which the door tightly engages a sealing ring 6 mounted on the autoclave housing 1 around the access opening 3 which is opened and closed by the door.

FIG.1.

EP 0 259 009 A2

## AUTOCLAVE SEALING

This invention relates to autoclves and other pressure and/or sterilizing vessels having a sliding door and a seal for sealing between the door and the vessel when the door is closed.

Autoclaves having sliding doors have been available now for several years, and usually the door sealing in these autoclaves is effected by means of either a floating 'O' ring seal, an inflatable seal, or a complex driven reciprocating cam arrangement brought into action when the sliding autoclave door is finally in the closed position.

The floating 'O' ring seal arrangement and the inflatable seal arrangement both rely on an external pressurized fluid source to achieve and maintain sealing, and in the event of the source pressure falling or disappearing altogether, or of the door seal puncturing, the sealing of the autoclave chamber will be lost. This has the disadvantage that it is then possible for steam to escape from the autoclave chamber during operation so that the goods or product being treated is not properly sterilized, and if a contaminated biological waste is being treated there is the possibility that biological waste can leak from the chamber before it has been effectively processed and rendered harmless.

The other sealing arrangement has the disadvantage of being both complex and clumsy in operation, requiring externally driven shafts and a large amount of space within the door closing arrangement for mechanical gears and cams.

According to the present invention there is provided an autoclave or other pressure or sterilizing vessel having a sliding door and a seal for sealing between the door and the vessel when the door is closed, the sliding door being movable in the sliding direction between an open position and a closed but unsealed position, and movable transversely with repect to the sliding direction between the closed but unsealed position and a closed and sealed position.

Preferably the door is mounted on a support member which is reciprocable in the sliding direction and which is connected to the door so that upon moving the door to its closed but unsealed position the member (but not the door) is able to continue to move in the sliding direction to cause cam means to displace the door transversely into the closed and sealed position.

Preferably the door is driven between the open and closed positions, for example by fluid pressure operated means acting on the support member, and is moved automatically into the closed and sealed position after reaching the closed but unsealed position from the open position.

As will be appreciated, in an autocalve or other vessel in accordance with the invention it is the door which is moved to engage the seal when the door is closed, the door engaging the seal in a clamping movement rather than in a sliding movement. Furthermore, the arrangement is not reliant on the maintenance of pressure behind or in the seal in order to keep the seal unbroken during operation of the vesse. Instead sealing is effected and maintained automatically by the mechanical arrangement which presses the door towards the vessel to clamp the seal therebetween when the door is closed, and by incorporating this into the sliding closure mechanism a particularly compact and reliable autoclave door sealing arrangement is achieved.

Further preferred features of the invention will become apparent from the following description with reference to the accompanying drawings which illustrate one example of the door sealing arrangement in an autoclave in accordance with the invention, and in which:-

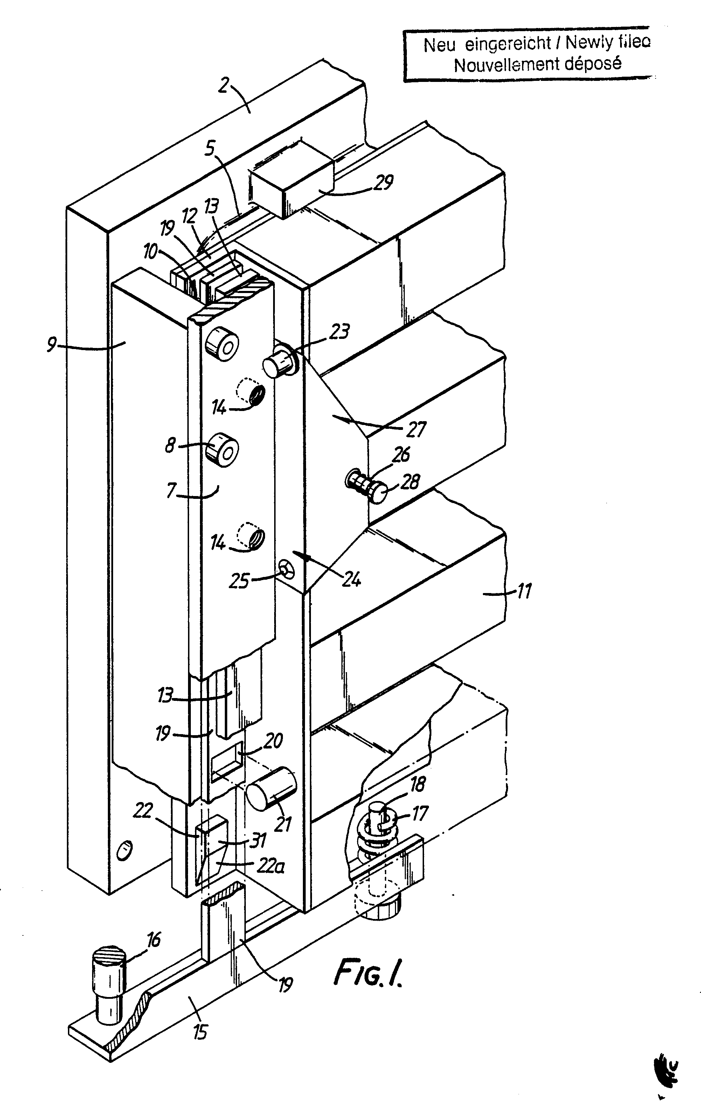

Figure 1 is a partly borken away perspective view of part of the autoclave door assembly showing the door in the closed position;

Figure 2 is a sectional view through part of the door sealing assembly with the door closed but unsealed; and

Figure 3 is a view similar to that of Figure 2 but showing the door in the closed and sealed position.

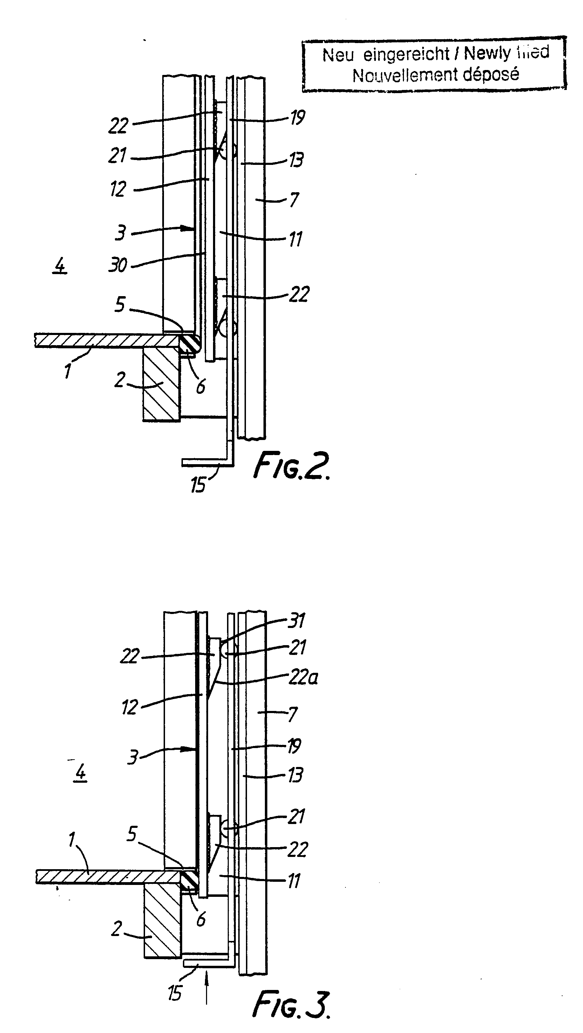

The autoclave of the present example comprises a housing 1 fitted with a flat header flange 2 surrounding a rectangular opening 3 at the front of the housing for providing access to the autoclave chamber 4 within the housing. Fixed to the housing 1 and header flange 2 around the access opening 3 is a door seal housing 5 defining a forwardly facing channel in which is seated an elastomeric O-sealing ring 6 such that a portion of the ring projects forwardly out of the channel, as can be seen in Figure 2.

A pair of vertical guide rails 7 (only one is shown) are fixed by bolts 8 through spacers 9 to the front face of the header flange 2 on opposite sides of the access opening 3, the guide rails extending parallel to the header flange and forming with the spacers and the header flange mutually inwardly facing channels 10. The guide rails 7 serve to guide a sliding door 11 in linear movement between a lowered open position (not shown) and a raised closed position as shown in the drawings, with flanged edges 12 at the opposite sides of the door being located in the channels 10. The face of each guide rail 7 within the channel 10 is provided by an adjustment strip 13 which can be adjusted in position by grub screws 14.

The door 11 is moved to the closed position by means of a pair of fluid pressure operated cylinders (not shown) arranged to act vertically on opposite ends of a support frame 15 which extends horizontally below the lower edge of the door and on which the door is spring mounted. In this example the door operating cylinders are single acting pneumatic cylinders and are mounted outwards of the guide spacers 9 with the lower ends of their pistons being attached to the support frame 15 as shown at 16. The door 11 is mounted on the frame 15 by means of a number of coiled compression springs 17 (only one shown) spaced apart along the frame 15, each spring 17 surrounding a mounting bolt 18 connecting the frame 15 to the door 11 in a manner which permits, within limits, the frame to move vertically relative to the door, and the door to move transversely relative to the support frame as will be explained below. For this purpose, the mounting bolts 18 may project through slots in the frame 15 and be fixed to the door 11, or vice versa.

Also carried by the support frame 15 are a pair of locking strips 19 which are fixed to the frame adjacent the guide rails 7 so that each locking strip 19 extends vertically from the frame 15 into the channel 10 and between the door flange 12 and the adjustment strip 13 of the guide rail 7. Each locking strip 19 has a series of vertically spaced slots 20 holding captive rollers 21 (or balls) which engage on one side of the locking strip and adjustment strip 13 of the guide rail 7, and on the other side of the locking strip the surfaces of a series of cam ramps 22 which are correspondingly vertically spaced along the face of the door flange 12.

When sliding between the open and closed positions the door 11 runs smoothly on the guide rails 7 with the rollers 21 rolling on the adjustment strips 13 at the rear faces of the rails, and vertically spaced flanged rollers 23 (only one shown) running on the front and inner edge faces of the rails. Each flanged roller 23 is mounted on an arm 24 which is pivoted at 25 on the side of the door 11 and is biassed by a spring 26, acting between a flange 27 of the arm and the head of bolt 28 fixed to the door and projecting through an opening in the flange 27. The spring 26 urges the roller 23 against the guide rail 7, and the reaction force acting on the door serves also to hold the rollers 21 against the adjustment strips 13.

The door mounting bolts 18 and the adjustment strip 13 are adjusted so that the relative vertical positions of the door 11 and the support frame 15, in the open position of the door, are such that the rollers 21 are located on the inclined surfaces 22a of the ramps 22, and the transverse clearance between the door and the plane of the sealing ring 6 is about 5 mms.

When the door is to be closed, the door operating cylinders are pressurised to lift the support frame 15 and thereby move the door 11 smoothly upwards along the guide rails 7 until the upper edge of the door engages a pair of door stops 29 fixed to the header flange 2 to define the closed position. The spring biassed flanged rollers 23 maintain the door seal clearance throughout this movement so that, on reaching the stops 29, the face 30 of the door is still spaced from the sealing ring 6 as shown in Figure 2, and the door is therefore in a closed but unsealed position.

As this stage, however, the door operating cylinders have not quite finished their stroke, and continue to raise the support frame 15, thereby compressing the springs 27 (since the door cannot move any further because of the door stops 29) and moving the locking strips 19 vertically upwards relative to the door 11 so that the rollers 21 are driven up the inclined ramp surfaces 22a onto platform surfaces 31 as shown in Figure 3. This operation cams the door 11 transversely towards and into tight engagement with the sealing ring 6, thereby compressing the sealing ring within the seal housing 5 to form a pressure tight seal between the door and the housing. The door is now closed and sealed. The spring biassed pivoted arm arrangement of the rollers 23 acting on the front face of the guide rails 7 permits the transverse movement of the door relative to the guide rails, and the arrangement of the springs 17 and mounting bolts 18 permits the transverse movement of the door relative to the support frame.

With this arrangement the door 11 is able to move linearly from the open position to the closed position, and on reaching the latter position is automatically moved positively transversely with respect to the sliding direction into the closed and sealed position in engagement with the sealing ring 6. The door is retained in this closed and sealed position by the door operating cylinders, but preferably a mechanical interlock, for example a spring loaded locking bolt, will be provided for preventing any accidental release.

When the door 11 is to be opened after completion of a sterilising cycle, the locking bolt is released and the door operating cylinders are vented. As the pressure decays, the springs 17 push the support frame 15 downwards away from the door to the limit determined by the bolts 18, thereby retracting the locking strips 19 and moving the rollers 21 back down off the ramp platforms 31 to their initial position on the inclined surfaces 22a. This allows the spring-loading acting on the flanged rollers 23 to move the door 11 away from the sealing ring 6 back to the closed but unsealed position of Figure 2, and the door then opens under the action of gravity.

If preferred, however, the door may be power operated in both the closing and opening directions by using double acting door operating cylinders. Also, although the example described has a vertically sliding door, it will of course be appreciated that the invention is equally applicable to autoclaves having horizontally sliding doors.

## Claims

1. An autoclave or other pressure or sterilizing vessel (1,2) having a sliding door (11) and a seal (6) for sealing between the door and the vessel when the door is closed, the sliding door (11) being movable in the sliding direction between an open position and a closed but unsealed position (Fig.2), and movable transversely with respect to the sliding direction between the closed but unsealed position and a closed and sealed position (Fig.3).

2. A vessel according to claim 1, in which the door (11) is mounted on a support member (15) which is reciprocable in the sliding direction and which is connected to the door (11) so that upon moving the door to its closed but unsealed position the member (15) (but not the door) is able to continue to move in the sliding direction to cause cam means (21,22) to displace the door transversely into the closed and sealed position.

3. A vessel according to claim 2, in which the door (11) is spring mounted on the support member (15) to permit relative movement therebetween when the door is in the closed but unsealed position.

4. A vessel according to claim 3, in which the spring mounting comprises a plurality of coil springs (17) through which extend mounting bolts (18) connecting the support member (15) to the door (11) in a manner which permits the support member to move vertically relative to the door, and the door to move transversely relative to the support member.

5. A vessel according to any one of claims 2 to 4, in which the cam means comprises a number of ramps (22) mounted on the door (11), and follower means (21) engageable with the ramps and movable with the support member (15).

6. A vessel according to claim 5, in which the cam followers are rollers (21) held captive by locking strips (19) which are fixed to the support member (15) and extend between the ramps (22) and guide rails (7) along which the door (11) moves between the open and closed positions.

7. A vessel according to claim 6, in which the door (11) carries spring-loaded guide rollers (23) which engage and run on the guide rails (7) on the opposite side from the locking strips (19), and which bias the door towards the unsealed position when the door is closed.

8. A vessel according to claim 7, in which the guide rollers (23) are flanged and also engage the inner edges of the guide rails (7).

9. A vessel according to any one of the preceding claims , in which the door (11) is driven between the open and the closed positions and is moved automatically to the closed and sealed position after reaching the closed but unsealed position from the open position.

10. A vessel according to any one of the preceding claims, in which the seal is an O-ring seal (6) mounted around the vessel opening (3) which is opened and closed by the door (11), the seal (6) being engaged by the inner face (28) of the door when the door is in the closed and sealed position and spaced therefrom when the door is in the closed but unsealed position.

*Fig. 1.*

**FIG.2.**

**FIG.3.**